# EUROPEAN PATENT APPLICATION

(11) **EP 4 701 153 A1**
(43) Date of publication of application: **25.02.2026**
(21) Application number: 24758694.4
(22) Date of filing: 27.06.2024
(51) Int. Cl.: H04L 45/74, H04L 67/2866, H04L 45/02, H04L 67/50

(54) **COMPUTING POWER ROUTING ADVERTISEMENT METHOD AND APPARATUS, AND DEVICE**

(71) Applicant: New H3C Technologies Co., Ltd., Hangzhou, Zhejiang 310052 (CN)
(72) Inventor: ZHANG, Tao, Beijing 100102 (CN); LIN, Changwang, Beijing 100102 (CN)
(74) Representative: 2SPL Patentanwälte PartG mbB
(86) International application number: PCT/CN2024/101953
(87) International publication number: WO 2026/000292

(57) **Abstract**

The present application provides a computing force route advertisement method, apparatus and device. The method includes: receiving a first service message that includes a first service feature; sending a second-type computing force route to a computing force route egress node if there is no flow table matching the first service feature and there is a first mapping table entry matching the first service feature in the mapping table, wherein the second-type computing force route includes a first CS-ID corresponding to the first service feature; receiving a third-type computing force route sent by the computing force route egress node, wherein the third-type computing force route includes a computing force metric of each of a plurality of computing force service nodes; selecting a target computing force service node according to the computing force metric of each computing force service node and establishing the flow table matching the first service feature, wherein the flow table includes path information; and sending the first service message to the target computing force service node in accordance with the path information. Through the solutions of the present application, the utilization efficiency of computing resources is improved.

## Description

### TECHNICAL FIELD

The present application relates to the field of communication technologies, and in particular to a computing force route advertisement method, apparatus and device.

### BACKGROUND

With the rapid development of new technologies such as supercomputing, artificial intelligence and big data, computing force services are applied more and more widely. The computing force services means that computing power is taken as a service is provided to enterprises or individuals through technical means such as cloud computing and edge computing. The computing force services can solve problems such as insufficient computing resources, high costs and low efficiency, thereby providing the enterprises or the individuals with flexible computing powers to meet different service requirements and cope with computing tasks of different scales, which improves the computing power and the computing efficiency.

For one computing force service (such as a video computing force service and an artificial intelligence computing force service), multiple computing force service nodes are usually deployed for jointly implementing the computing force service.

However, when one computing force service that corresponds to multiple computing force service nodes is accessed by a terminal device, there is no effective way to determine to which computing force service node the terminal device's message is to be sent, which makes it impossible to fully utilize the computing resources of each computing force service node and results in a waste of computing resources.

### SUMMARY

The present application provides a computing force route advertisement method, being applicable to a computing force route ingress node in which a mapping table exists, wherein the mapping table includes a correspondence between service features and computing-aware traffic steering (CATS) service identifiers (CS-IDs), and the mapping table is generated from a first-type computing force route sent by a computing force route egress node, and the method includes:
receiving a first service message, wherein the first service message includes a first service feature;
sending a second-type computing force route to the computing force route egress node if there is no flow table matching the first service feature and there is a first mapping table entry matching the first service feature in the mapping table, wherein the second-type computing force route includes a first CS-ID corresponding to the first service feature;
receiving a third-type computing force route sent by the computing force route egress node, wherein the third-type computing force route includes a computing force metric of each of a plurality of computing force service nodes, and the plurality of computing force service nodes correspond to the same first CS-ID;
selecting a target computing force service node according to the computing force metric of each computing force service node and establishing the flow table matching the first service feature, wherein the flow table includes path information; and
sending the first service message to the target computing force service node in accordance with the path information.

The present application provides a computing force route advertisement method, being applicable to a computing force route egress node, and the method includes:
sending a first-type computing force route to a computing force route ingress node, wherein the first-type computing force route includes a service feature and a CS-ID for the computing force route ingress node to generate a mapping table that includes a correspondence between service features and CS-IDs;
receiving a second-type computing force route sent by the computing force route ingress node, wherein the second-type computing force route includes a first CS-ID;
obtaining a computing force metric of each of a plurality of computing force service nodes corresponding to the first CS-ID; and
sending a third-type computing force route to the computing force route ingress node, wherein the third-type computing force route includes the computing force metric of each computing force service node, and is configured for the computing force route ingress node to select a target computing force service node according to the computing force metric of each computing force service node.

The present application provides a computing force route advertisement apparatus, being applicable to a computing force route ingress node in which a mapping table exists, wherein the mapping table includes a correspondence between service features and CS-IDs, and the mapping table is generated from a first-type computing force route sent by a computing force route egress node, and the apparatus includes:
a receiving module, configured to receive a first service message, wherein the first service message includes a first service feature;
a sending module, configured to send a second-type computing force route to the computing force route egress node if there is no flow table matching the first service feature and there is a first mapping table entry matching the first service feature in the mapping table wherein the second-type computing force route includes a first CS -ID corresponding to the first service feature;
wherein the receiving module is further configured to receive a third-type computing force route sent by the computing force route egress node, wherein the third-type computing force route includes a computing force metric of each of a plurality of computing force service nodes, and the plurality of computing force service nodes correspond to the same first CS-ID; and
a processing module, configured to select a target computing force service node according to the computing force metric of each computing force service node and establish the flow table matching the first service feature, wherein the flow table includes path information;
wherein the sending module is further configured to send the first service message to the target computing force service node in accordance with the path information.

The present application provides a computing force route advertisement apparatus, being applicable to a computing force route egress node, and the apparatus includes:
a sending module, configured to send a first-type computing force route to a computing force route ingress node, wherein the first-type computing force route includes a service feature and a CS-ID for the computing force route ingress node to generate a mapping table that includes a correspondence between service features and CS-IDs;
a receiving module, configured to receive a second-type computing force route sent by the computing force route ingress node, wherein the second-type computing force route includes a first CS-ID; and
an obtaining module, configured to obtain a computing force metric of each of a plurality of computing force service nodes corresponding to the first CS-ID;
wherein the sending module is further configured to send a third-type computing force route to the computing force route ingress node, wherein the third-type computing force route includes the computing force metric of each computing force service node, and is configured for the computing force route ingress node to select a target computing force service node according to the computing force metric of each computing force service node.

The present application provides a computing force route ingress node, including: a processor and a machine-readable storage medium storing machine-executable instructions executable by the processor; wherein the processor is configured to execute the machine-executable instructions to implement the computing force route advertisement method of the above example.

The present application provides a computing force route egress node, including: a processor and a machine-readable storage medium storing machine-executable instructions executable by the processor; wherein the processor is configured to execute the machine-executable instructions to implement the computing force route advertisement method of the above example.

According to the above technical solutions, by the first-type computing force route, the second-type computing force route and the third-type computing force route that are exchanged in the examples of the present application, a computing force route ingress node can obtain a computing force metric of each computing force service node, select a target computing force service node according to these computing force metrics, and send a message to the target computing force service node. Thus, the message can be sent to the computing force service node with the best computing force metric, which makes full use of the computing resources of each computing force service node, thereby improving the utilization efficiency of the computing resources and avoiding the waste of the computing resources. Through the on-demand distributed subscription to computing force routes, it can efficiently achieve the advertisement of the computing force metrics.

### BRIEF DESCRIPTION OF THE DRAWINGS

FIG. 1A and FIG. 1B are schematic flowcharts of a computing force route advertisement method in an example of the present application.
FIG. 2 is a schematic structure diagram of a computing force service system in an example of the present application.
FIG. 3 is a schematic diagram of an on-demand distributed subscription to computing force routes in an example of the present application.
FIG. 4 is a schematic flowchart of a computing force route advertisement method in an example of the present application.
FIG. 5A is a schematic diagram of subscribing to computing force metrics corresponding to a CS-ID without an RR in the present application.
FIG. 5B is a schematic diagram of subscribing to computing force metrics corresponding to a CS-ID with an RR in the present application.
FIG. 5C is a schematic diagram of unsubscribing to computing force metrics corresponding to a CS-ID without an RR in the present application.
FIG. 5D is a schematic diagram of unsubscribing to computing force metrics corresponding to a CS-ID with an RR in the present application.
FIG. 6A-FIG. 6E are schematic diagrams of a computing force route format with an RR in the present application.
FIG. 7A and FIG. 7B are schematic structure diagrams of a computing force route advertisement apparatus in an example of the present application.
FIG. 8 is a hardware structure diagram of an electronic device in an example of the present application.

### DETAILED DESCRIPTION OF THE EMBODIMENTS

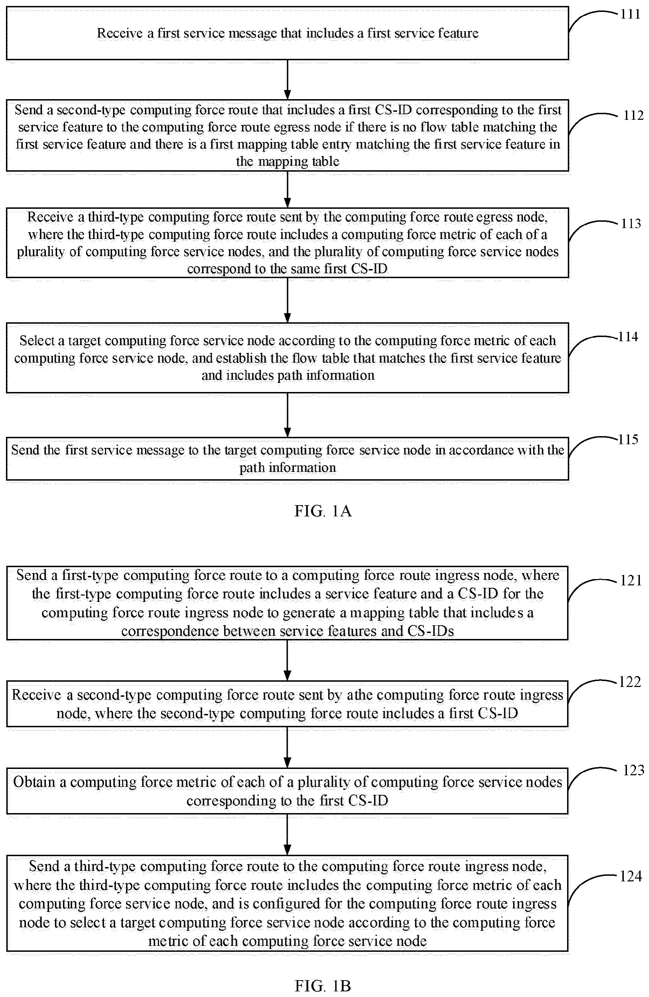

An example of the present application provides a computing force route advertisement method, which is applicable to a computing force route ingress node. A mapping table already exists in the computing force route ingress node. The mapping table includes a correspondence between service features and computing-aware traffic steering (CATS) service identifiers (CS-IDs). The mapping table is generated from a first-type computing force route sent by a computing force route egress node. As illustrated in FIG. 1A which is a schematic flowchart of the method, the method may include the following steps.

At step 111, a first service message that includes a first service feature is received.

At step 112, a second-type computing force route that includes a first CS-ID corresponding to the first service feature is sent to the computing force route egress node if there is no flow table matching the first service feature and there is a first mapping table entry matching the first service feature in the mapping table.

At step 113, a third-type computing force route sent by the computing force route egress node is received. The third-type computing force route includes a computing force metric of each of a plurality of computing force service nodes, and the plurality of computing force service nodes correspond to the same first CS-ID.

At step 114, a target computing force service node is selected according to the computing force metric of each computing force service node, and the flow table that matches the first service feature and includes path information is established.

At step 115, the first service message is sent to the target computing force service node in accordance with the path information.

According to the above technical solution in the example of the present application, by the first-type computing force route, the second-type computing force route and the third-type computing force route that are exchanged, the computing force route ingress node can obtain the computing force metric of each computing force service node, select the target computing force service node according to these computing force metrics, and send the message to the target computing force service node. Thus, the message can be sent to the computing force service node with the best computing force metric, which makes full use of the computing resources of each computing force service node, thereby improving the utilization efficiency of the computing resources and avoiding the waste of the computing resources. Through the on-demand distributed subscription to computing force routes, it can efficiently achieve the advertisement of the computing force metrics.

An example of the present application provides a computing force route advertisement method, which is applicable to a computing force route egress node. As illustrated in FIG. 1B which is a schematic flowchart of the method, the method may include the following steps.

At step 121, a first-type computing force route is sent to a computing force route ingress node, where the first-type computing force route includes a service feature and a CS-ID for the computing force route ingress node to generate a mapping table that includes a correspondence between service features and CS-IDs.

At step 122, a second-type computing force route sent by the computing force route ingress node is received, where the second-type computing force route includes a first CS-ID.

At step 123, a computing force metric of each of a plurality of computing force service nodes corresponding to the first CS-ID is obtained.

At step 124, a third-type computing force route is sent to the computing force route ingress node, where the third-type computing force route includes the computing force metric of each computing force service node, and is configured for the computing force route ingress node to select a target computing force service node according to the computing force metric of each computing force service node.

According to the above technical solution in the example of the present application, by the first-type computing force route, the second-type computing force route and the third-type computing force route that are exchanged, the computing force route ingress node can obtain the computing force metric of each computing force service node, select the target computing force service node according to these computing force metrics, and send the message to the target computing force service node. Thus, the message can be sent to the computing force service node with the best computing force metric, which makes full use of the computing resources of each computing force service node, thereby improving the utilization efficiency of the computing resources and avoiding the waste of the computing resources. Through the on-demand distributed subscription to computing force routes, it can efficiently achieve the advertisement of the computing force metrics.

In an example, the first-type computing force route further includes a node position of the computing force route egress node. The mapping table further includes the node position, that is, the mapping table includes the correspondence of the service feature, the CS-ID and the node position of the computing force route egress node. Thus, the computing force route ingress node sends the second-type computing force route to the computing force route egress node, which may include: obtaining a first node position corresponding to the first service feature from the first mapping table entry; and sending the second-type computing force route to the computing force route egress node in accordance with the first node position.

In an example, there is further a metric update table in the computing force route ingress node. The computing force route ingress node sends the second-type computing force route to the computing force route egress node, which may include: interrogating the metric update table according to the first CS-ID; and sending the second-type computing force route to the computing force route egress node if there are no computing force metrics of the plurality of computing force service nodes corresponding to the first CS-ID in the metric update table.

In an example, there is further a metric update table in the computing force route egress node. After receiving the second-type computing force route sent by the computing force route ingress node, the computing force route egress node may further record the first CS-ID and the computing force metric of each computing force service node in the metric update table. When the computing force metric of any computing force service node corresponding to the first CS-ID changes, the computing force route egress node sends the third-type computing force route to the computing force route ingress node, and records the changed computing force metric of the computing force service node in the metric update table.

Since the computing force metrics of the computing force service nodes may change multiple times, each change is to trigger the computing force route egress node to send the third-type computing force route. Therefore, the computing force route ingress node may receive multiple third-type computing force routes.

There is further the metric update table in the computing force route ingress node. After receiving each third-type computing force route, the computing force route ingress node records the correspondence between the first CS-ID and the computing force metric of each computing force service node and records the update time of each computing force metric (such as taking the current time as the update time) in the metric update table.

In an example, the computing force route ingress node may receive a second service message. The second service message includes a second service feature. If there is no flow table matching the second service feature and there is the first mapping table entry matching the second service feature in the mapping table, the computing force route ingress node interrogates the metric update table according to the first CS-ID.

If there are the computing force metrics of the plurality of computing force service nodes corresponding to the first CS-ID in the metric update table and a difference between the current time and the update time is less than a threshold, the computing force route ingress node selects a target computing force service node according to the computing force metric of each computing force service node and establishes the flow table matching the second service feature.

If there are no computing force metrics of the plurality of computing force service nodes corresponding to the first CS-ID in the metric update table, or if there are the computing force metrics of the plurality of computing force service nodes corresponding to the first CS-ID in the metric update table and the difference between the current time and the update time is not less than the threshold, the computing force route ingress node sends the second-type computing force route to the computing force route egress node.

In an example, if all the flow tables corresponding to the first CS-ID are aged, the computing force route ingress node sends a withdraw route to the computing force route egress node, where the withdraw route may include the first CS-ID.

The computing force route egress node that receives the withdraw route deletes the first CS-ID and the computing force metrics corresponding to the first CS-ID from the metric update table. The computing force route egress node stops sending the third-type computing force route directed to the first CS-ID to the computing force route ingress node.

When sending the withdraw route to the computing force route egress node, the computing force route ingress node may obtain the first node position corresponding to the first CS-ID from the first mapping table entry. The computing force route ingress node sends the withdraw route to the computing force route egress node in accordance with the first node position.

In an example, the withdraw route is targeted at the second-type computing force route, which means that the second-type computing force route needs to be withdrawn. For example, the function of the second-type computing force route is to trigger the computing force route egress node to send the third-type computing force route directed to the first CS-ID to the computing force route ingress node. Therefore, the function of the withdraw route targeted at the second-type computing force route is to trigger the computing force route egress node to stop sending the third-type computing force route directed to the first CS-ID to the computing force route ingress node.

In an example, when sent from the computing force route egress node to the computing force route ingress node, the first-type computing force route may be sent directly from the computing force route egress node to the computing force route ingress node, and alternatively, the first-type computing force route may be sent from the computing force route egress node to the computing force route ingress node via a route reflector (RR).

In an example, when sent from the computing force route ingress node to the computing force route egress node, the second-type computing force route may be sent directly from the computing force route ingress node to the computing force route egress node, and alternatively, the second-type computing force route may be sent from the computing force route ingress node to the computing force route egress node via an RR.

In an example, when sent from the computing force route egress node to the computing force route ingress node, the third-type computing force route may be sent directly from the computing force route egress node to the computing force route ingress node, and alternatively, the third-type computing force route may be sent from the computing force route egress node to the computing force route ingress node via an RR.

In an example, a new address family, i.e., a computing force route address family, may be added. The computing force route address family supports the first-type computing force route, the second-type computing force route, and the third-type computing force route. In an example of the present application, the route information advertisement of the computing force route address family may be implemented through a border gateway protocol (BGP) message.

For example, the BGP message includes a network layer reachability information (NLRI) field. The NLRI field may include an address family information field, a route type field and a route type specific key field. When being a first designated identifier, the address family information field indicates that the BGP message is targeted at a computing force route.

The route type field being a first value indicates that the BGP message is the first-type computing force route, and the route type specific key field carries the first CS-ID. The BGP message further includes a path attribute field related to the NLRI field, and the path attribute field carries the service feature corresponding to the first CS-ID and the node position of the computing force route egress node.

The route type field being a second value indicates that the BGP message is the second-type computing force route, and the route type specific key field carries the first CS-ID.

The route type field being a third value indicates that the BGP message is the third-type computing force route, and the route type specific key field carries the first CS-ID. When the BGP message is the third-type computing force route, the NLRI field further includes a route type specific non-key field, and the route type specific non-key field carries the computing force metric of each computing force service node corresponding to the first CS-ID.

In an example, the computing force routes may be expanded in an Ethernet virtual private network (EVPN) address family. The EVPN address family supports EVPN routes, the first-type computing force routes, the second-type computing force routes, and the third-type computing force routes.

For example, the BGP message includes the NLRI field, and the NLRI field includes the address family information field, the route type field and the route type specific key field. When being a second designated identifier, the address family information field indicates that the BGP message is targeted at the EVPN route.

The route type field being a fourth value in a preset set indicates that the BGP message is the first-type computing force route, and the route type specific key field carries the first CS-ID. The BGP message further includes the path attribute field related to the NLRI field, and the path attribute field carries the service feature corresponding to the first CS-ID and the node position of the computing force route egress node.

The route type field being a fifth value in the preset set indicates that the BGP message is the second-type computing force route, and the route type specific key field carries the first CS-ID.

The route type field being a sixth value in the preset set indicates that the BGP message is the third-type computing force route, and the route type specific key field carries the first CS-ID. When the BGP message is the third-type computing force route, the NLRI field further includes the route type specific non-key field, the route type specific non-key field carries the computing force metric of each computing force service node corresponding to the first CS-ID.

The values in the preset set are not occupied by the EVPN routes.

The above technical solutions of the examples of the present application are described below in combination with specific application scenarios.

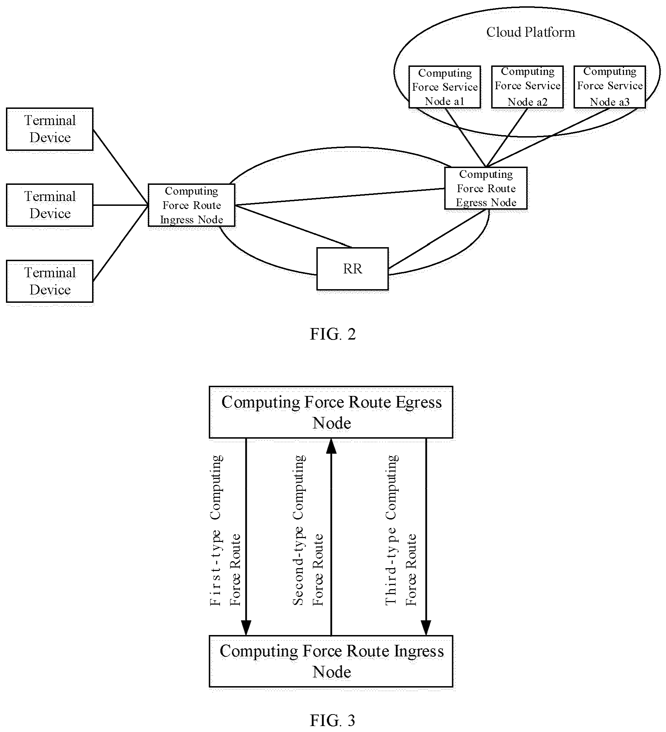

As illustrated in FIG. 2 which is a schematic structure diagram of a computing force service system, the computing force service system may include a computing force route ingress node (for example, an ingress gateway device), a computing force route egress node (for example, an egress gateway device) and a plurality of computing force service nodes, in which these computing force service nodes jointly implement a computing force service. The computing force route egress node may be a router such as a router supporting a BGP. The computing force route egress node may be a router such as a router supporting the BGP.

The computing force route ingress node may be connected to terminal devices. The terminal device may be a mobile device (such as a smartphone), a home device (such as a personal computer, a router, a laptop, a TV and a camera), or an enterprise device (such as a personal computer, a router and a laptop).

The computing force route egress node may be connected to a cloud platform (also called a cloud management platform). The cloud platform may include the plurality of computing force service nodes, that is, the computing force route egress node may be connected to the plurality of computing force service nodes.

In FIG. 2, it takes an example that the plurality of computing force service nodes are three computing force service nodes, denoted as Computing Force Service Node a1, Computing Force Service Node a2 and Computing Force Service Node a3. It is to be understood that the number of the computing force service nodes may be greater. The computing force service node may be a server or another device that can provide computing force resources.

The plurality of computing force service nodes may jointly implement the computing force service (such as a video computing force service and an artificial intelligence computing force service). These computing force service nodes are configured to provide computing force resources such as computing resources for the computing force service.

In some scenarios, the computing force service system may include an RR. In some scenarios, the computing force service system may not include the RR. The RR, as a router, may serve as a central point for storing and forwarding route entries, and may redistribute the route information to other routers.

In an example that one computing force service corresponds to the plurality of computing force service nodes (Computing Force Service Node a1, Computing Force Service Node a2 and Computing Force Service Node a3), there is no effective way to determine to which computing force service node the terminal device's message is to be sent when the terminal device accesses the computing force service, which makes it impossible to fully utilize the computing resources of each computing force service node and results in the waste of the computing resources. For example, all the messages of the terminal device may be sent to Computing Force Service Node a1, while Computing Force Service Node a2 and Computing Force Service Node a3 are idle, resulting in the waste of the computing resources of Computing Force Service Node a2 and Computing Force Service Node a3.

In response to the above findings, by a first-type computing force route, a second-type computing force route and a third-type computing force route that are exchanged in the examples of the present application, the computing force route ingress node can obtain a computing force metric of each computing force service node, so that the message can be sent to the computing force service node with the best computing force metric, which makes full use of the computing resources of each computing force service node, thereby improving the utilization efficiency of the computing resources.

In an example, an on-demand distributed subscription to computing force routes may be utilized to achieve an efficient advertisement of the computing force metrics. As illustrated in FIG. 3, it is a schematic diagram of the on-demand distributed subscription to computing force routes.

First, a service registration process of the on-demand distributed subscription to computing force routes is performed. For example, the computing force route egress node sends the first-type computing force route to the computing force route ingress node. The first-type computing force route includes a service feature, a CS-ID and a node position of the computing force route egress node. The computing force route egress node registers a correspondence of the service feature, the CS-ID and its own node position to the computing force route ingress node.

Then, a subscription process of the on-demand distributed subscription to computing force routes is performed. For example, when expected to obtain forwarding paths corresponding to the CS-ID (that is, there is a demand to obtain the computing force metrics), the computing force route ingress node sends the second-type computing force route to the computing force route egress node. The second-type computing force route includes the CS-ID. The second-type computing force route is configured to subscribe to the computing force metrics corresponding to the CS-ID on demand.

Subsequently, an advertisement process of the on-demand distributed subscription to computing force routes is performed. For example, after receiving the second-type computing force route, the computing force route egress node is informed that there is a need to advertise the computing force metrics corresponding to the CS-ID. Therefore, the computing force route egress node obtains the computing force metric of each computing force service node corresponding to the CS-ID, and sends the third-type computing force route to the computing force route ingress node. The third-type computing force route includes the computing force metric of each computing force service node corresponding to the CS-ID, so that these computing force metrics are advertised to the computing force route ingress node.

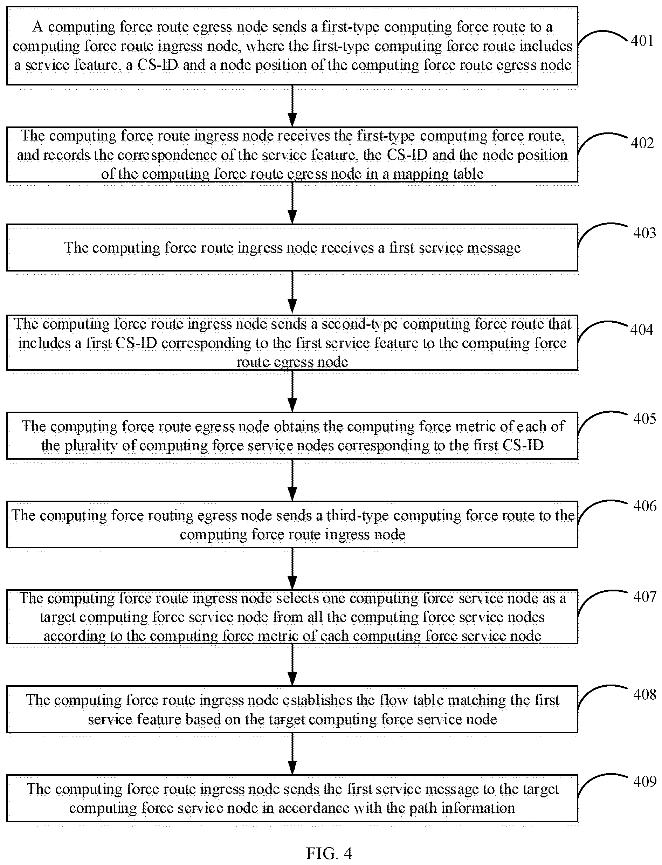

In an example, as illustrated in FIG. 4, it is a flowchart of a computing force route advertisement method, which includes the following steps.

At step 401, a computing force route egress node sends a first-type computing force route to a computing force route ingress node. The first-type computing force route includes a service feature, a CS-ID and a node position of the computing force route egress node.

At step 402, the computing force route ingress node receives the first-type computing force route, obtains the service feature, the CS-ID and the node position of the computing force route egress node from the first-type computing force route, and records the correspondence of the service feature, the CS-ID and the node position of the computing force route egress node in a mapping table.

In an example, for a scenario where an RR exists, the computing force route egress node may send the first-type computing force route to the RR, and the RR sends the first-type computing force route to the computing force route ingress node. For a scenario where the RR does not exist, the computing force route egress node may directly send the first-type computing force route to the computing force route ingress node.

In an example, both the computing force route egress node and the computing force route ingress node enable a service of an on-demand distributed subscription to computing force routes. This service is configured to enable the computing force route egress node and the computing force route ingress node to perform an advertisement process of the on-demand distributed subscription to computing force routes, that is, to perform the computing force route advertisement method illustrated in FIG. 4.

After enabling the service of the on-demand distributed subscription to computing force routes, the computing force route egress node may send the first-type computing force route to the computing force route ingress node. For example, the computing force route egress node may send the first-type computing force route to the computing force route ingress node after starting up.

In the first-type computing force route, the CS-ID represents a service identifier. The CS-ID is a unique identifier for a computing force service (such as a video computing force service and an artificial intelligence computing force service). Different computing force services correspond to different CS-IDs.

According to the CS-ID, a plurality of computing force service nodes that provide computing force resources for the computing force service may be found. That is, the CS-ID corresponds to the computing force service, and corresponds to the plurality of computing force service nodes.

In the first-type computing force route, the service feature indicates the feature corresponding to the computing force service. For example, if a message includes the service feature corresponding to the computing force service, it means that the message accesses the computing force service. If the message does not include the service feature corresponding to the computing force service, it means that the message does not access the computing force service.

The service feature may be five-tuple information (for example, a source Internet Protocol (IP) address, a destination IP address, a source port, a destination port and a protocol type), three-tuple information (for example, a source IP address, a destination IP address and a protocol type), a destination IP address, or a message payload feature, which, however, is not a limitation on the service feature.

In the first-type computing force route, the node position of the computing force route egress node indicates the position of computing force route egress node, which may be an IP address or a device identifier of the computing force route egress node. There are no limitations on the node position except that the message may be sent to the computing force route egress node in accordance with the node position.

After receiving the first-type computing force route, the computing force route ingress node records the correspondence of the service feature, the CS-ID and the node position of the computing force route egress node in the mapping table, so that the service feature, the CS-ID and the node position are registered at the computing force route ingress node, so that the CS-ID can be mapped to according to the service feature.

At step 403, the computing force route ingress node receives a first service message. The first service message may include a service feature. The service feature in the first service message is denoted as a first service feature.

In an example, the computing force route ingress node may be connected to a plurality of terminal devices. These terminal devices may send messages, which are subsequently denoted as service messages (also called data messages), to the computing force route ingress node.

At step 404, the computing force route ingress node sends a second-type computing force route that includes a first CS-ID corresponding to the first service feature to the computing force route egress node if there is no flow table matching the first service feature and there is a first mapping table entry matching the first service feature in the mapping table.

In an example, when there is the first mapping table entry matching the first service feature in the mapping table, the first CS-ID corresponding to the first service feature may be obtained from the first mapping table entry.

When there is the first mapping table entry matching the first service feature in the mapping table, a first node position corresponding to the first service feature may be obtained from the first mapping table entry. The computing force route ingress node sends the second-type computing force route to the computing force route egress node in accordance with the first node position.

In an example, the computing force route ingress node may interrogate the flow table according to the first service feature (such as the five-tuple information, the three-tuple information, and the destination IP address). When there is the flow table matching the first service feature (whose establishment process refers to the subsequent steps), the first service message is directly forwarded in accordance with the flow table.

It is clear that the first service message may be sent to the computing force service node when the first service message accesses the computing force service. All the service messages with the same service feature, i.e., all the service messages accessing the computing force service from the same terminal device, may be sent to the same computing force service node in accordance with the flow table.

In an example, the computing force route ingress node interrogates the mapping table according to the first service feature if there is no flow table matching the first service feature. When there is no mapping table entry matching the first service feature in the mapping table, it means that the first service feature dose not correspond to the computing force service or the first service message does not access the computing force service. In this case, the computing force route ingress node may send the first service message.

When there is the first mapping table entry matching the first service feature in the mapping table (that is, the first mapping table entry includes the first CS-ID corresponding to the first service feature and the first node position), it means that the first service feature corresponds to the computing force service and the first service message access the computing force service.

In this case, assuming that the first service message is the first one to access the computing force service, that is, the computing force metrics corresponding to the first CS-ID have not been subscribed to through the second-type computing force route, the computing force route ingress node sends the second-type computing force route to the computing force route egress node in accordance with the first node position (such as the IP address or the device identifier of the computing force route egress node), so as to subscribe to the computing force metrics corresponding to the first CS-ID.

In an example, there is further a metric update table in the computing force route ingress node. If there is no flow table matching the first service feature and there is the first mapping table entry matching the first service feature in the mapping table, the computing force route ingress node interrogates the metric update table according to the first CS-ID.

When the first service message is the first one to access the computing force service, there are no computing force metrics corresponding to the first CS-ID in the metric update table. Thus, if there are no computing force metrics of the plurality of computing force service nodes corresponding to the first CS-ID in the metric update table, the computing force route ingress node sends the second-type computing force route to the computing force route egress node.

In an example, for a scenario where an RR exists, the computing force route ingress node may send the second-type computing force route to the RR, and the RR sends the second-type computing force route to the computing force route egress node. For a scenario where the RR does not exist, the computing force route ingress node may directly send the second-type computing force route to the computing force route egress node.

At step 405, the computing force route egress node receives the second-type computing force route that includes the first CS-ID. The computing force route egress node obtains the computing force metric of each of the plurality of computing force service nodes corresponding to the first CS-ID.

In an example, after receiving the second-type computing force route, the computing force route egress node is informed that the computing force route ingress node subscribes to the computing force metrics corresponding to the first CS-ID. Therefore, the computing force route egress node obtains the computing force metric of each computing force service node corresponding to the first CS-ID.

For example, the computing force route egress node sends a request message to a computing force service node. The computing force service node sends a response message to the computing force route egress node. The response message may include computing force status information of the computing force service node, such as a CPU usage, a memory usage, a capacity usage, a bandwidth usage, and other status parameters.

The computing force route egress node calculates the computing force metric of the computing force service node based on the computing force status information. As an example, if the computing force metric is coarse-grained, each status parameter in the computing force status information is normalized, and these status parameters are normalized to the same value range.

Then, a weighted operation is performed on the plurality of status parameters that are normalized. The weighting coefficients of different status parameters may be identical or different. A result of the weighted operation represents the computing force metric.

As another example, if the computing force metric is fine-grained, each status parameter in the computing force status information is normalized, and these status parameters are normalized to the same value range.

The plurality of status parameters that are normalized may be taken as the computing force metric. For example, the computing force metric includes the normalized CPU usage, memory usage, capacity usage, bandwidth usage, etc.

It is to be understood that the above are just examples of obtaining the computing force metric, which, however, are not limitations on the computing force metric.

At step 406, the computing force routing egress node sends a third-type computing force route to the computing force route ingress node. The third-type computing force route includes the computing force metric of each of the plurality of computing force service nodes corresponding to the first CS-ID. The computing force route ingress node receives the third-type computing force route.

In an example, for a scenario where an RR exists, the computing force route egress node may send the third-type computing force route to the RR, and the RR sends the third-type computing force route to the computing force route ingress node. For a scenario where the RR does not exist, the computing force route egress node may directly send the third-type computing force route to the computing force route ingress node.

Besides the computing force metrics, the third-type computing force route may include the first CS-ID and a unique identifier of each computing force service node. The unique identifier is an IP address or a CATS instance selector ID (CIS-ID) of the computing force service node. The unique identifier is enough if it can uniquely indicate the computing force service node. The CIS-ID is taken as an example for description.

The CIS-ID represents a service instance identifier. The CIS-ID is the unique identifier of the computing force service node. Different computing force service nodes may correspond to different CIS-IDs. Through this CIS-ID, the computing force service node that provides computing force resources for the computing force service may be found, that is, the CIS-ID corresponds to the computing force service node.

For example, the third-type computing force route may include the CS-ID, the CIS-ID of Computing Force Service Node a1, the computing force metric of Computing Force Service Node a1, the CIS-ID of Computing Force Service Node a2, the computing force metric of Computing Force Service Node a2, the CIS-ID of Computing Force Service Node a3, and the computing force metric of Computing Force Service Node a3 in sequence.

At step 407, the computing force route ingress node selects one computing force service node as a target computing force service node from all the computing force service nodes according to the computing force metric of each computing force service node.

After receiving the third-type computing force route, the computing force route ingress node may obtain the computing force metric of each computing force service node corresponding to the first CS-ID from the third-type computing force route.

When the computing force metric is coarse-grained, the computing force route ingress node takes the computing force service node with the best computing force metric as the target computing force service node. For example, assuming that the smaller computing force metric is better, the computing force route ingress node takes the computing force service node with the smallest computing force metric as the target computing force service node. Assuming that the greater computing force metric is better, the computing force route ingress node takes the computing force service node with the greatest computing force metric as the target computing force service node.

When the computing force metric is fine-grained, assuming that a CPU priority strategy is adopted, the computing force route ingress node takes the computing force service node with the lowest CPU usage as the target computing force service node (and considers other status parameters if all of the plurality of computing force service nodes have the lowest CPU usage).

Assuming that a memory priority strategy is adopted, the computing force route ingress node takes the computing force service node with the lowest memory usage as the target computing force service node.

Assuming a balance measurement is adopted, the computing force route ingress node performs the weighted operation on the status parameters such as the CPU usage, the memory usage, the capacity usage and the bandwidth usage to obtain the weighted operation result. The computing force route ingress node takes the computing force service node with the smallest weighted operation result as the target computing force service node.

In an example, besides the computing force metric, the computing force route ingress node may further consider a network status value during selecting the target computing force service node. For example, one computing force service node may be selected from all the computing force service nodes as the target computing force service node according to the computing force metric and the network status value.

For example, the computing force service system may further include a network controller. The network controller may obtain network status information between the computing force route ingress node to the computing force route egress node. The network status information may include an available bandwidth, a latency, a packet loss rate, etc. The network controller sends the network status information to the computing force route ingress node.

The computing force route ingress node may determine a network status value based on the network status information. When the network status information includes the available bandwidth, the network status value may be proportional to the available bandwidth. That is, the larger the available bandwidth, the better the network status value. When the network status information includes the latency, the network status value may be inversely proportional to the latency. That is, the smaller the latency, the better the network status value. When the network status information includes the packet loss rate, the network status value may be inversely proportional to the packet loss rate. That is, the smaller the packet loss rate, the better the network status value.

The computing force route ingress node may perform the weighted operation on the computing force metric and the network status value to obtain a comprehensive metric. The computing force route ingress node takes the computing force service node with the best comprehensive metric as the target computing force service node.

At step 408, the computing force route ingress node establishes the flow table matching the first service feature based on the target computing force service node. The matching items of the flow table include the first service feature, and the action items of the flow table include path information. The path information is configured for sending the first service message to the target computing force service node.

At step 409, the computing force route ingress node sends the first service message to the target computing force service node in accordance with the path information. For example, the flow table matching the first service feature of the first service message is found, and the first service message is sent to the target computing force service node in accordance with the path information in the flow table.

For sending the first service message from the computing force route ingress node to the target computing force service node, the computing force route ingress node first sends the first service message to the computing force route egress node, and then the computing force route egress node sends the first service message to the target computing force service node.

In an example, in order to send the first service message to the computing force route egress node, the computing force route ingress node may perform a tunnel encapsulation on the first service message. That is, the computing force route ingress node encapsulates a tunnel header for the first service message. The destination IP address of the tunnel header is the IP address of the computing force route egress node (which is obtained from the mapping table for example). To this end, the path information includes the IP address of the computing force route egress node when the flow table matching the first service feature is established.

Alternatively, the computing force route ingress node may send the first service message to the computing force route egress node in Segment Routing IPv6 (SRv6). To this end, the path information may include a segment identifier (SID) list of SRv6 forwarding paths when the flow table matching the first service feature is established. The SID list is configured for sending the first service message to the computing force route egress node.

It is to be understand that the above are just two examples of the path information. There are no limitations on the path information except that the first service message can be sent to the computing force route egress node in accordance with the path information.

In an example, in order to send the first service message from the computing force route egress node to the target computing force service node, the computing force route ingress node may modify the destination IP address of the first service message to the IP address of the target computing force service node. In this way, after receiving the first service message, the computing force route egress node forwards the first service message to the target computing force service node in accordance with the destination IP address of the first service message.

Alternatively, the computing force route ingress node may encapsulate the CIS-ID of the target computing force service node (which is obtained from the third-type computing force route) into the first service message. In this way, after receiving the first service message, the computing force route egress node sends the first service message to the target computing force service node corresponding to the CIS-ID. For example, the first service message may be sent to the target computing force service node in accordance with the IP address of the target computing force service node or in SRv6, which is not a limitation.

To this end, the path information may include the CIS-ID of the target computing force service node when the flow table matching the first service feature is established. The CIS-ID is encapsulated into the first service message.

It is to be understand that the above are just examples of the path information. There are no limitations on the path information except that the first service message can be sent from the computing force route egress node to the target computing force service node in accordance with the path information.

It is clear that in accordance with the path information of the flow table matching the first service feature that has been established in the above way, the computing force route ingress node may send the first service message to the computing force route egress node, and the computing force route egress node may send the first service message to the target computing force service node.

For a subsequent service message with the first service feature, due to the existed flow table matching the first service feature, the computing force route ingress node may send the service message to the target computing force service node in accordance with the path information of the flow table after receiving the service message.

In an example, after receiving the second-type computing force route and obtaining the computing force metric of each of the plurality of computing force service nodes corresponding to the first CS-ID in step 405, the computing force route egress node may further record the first CS-ID and the computing force metric of each computing force service node in the metric update table. As shown in Table 1, it is an example of the metric update table.

**Table 1**

| CS-ID | CIS-ID | Computing force metric |
|---|---|---|
| CS-ID1 | Aaa | Computing force metric A |
| | Bbb | Computing force metric B |
| | Ccc | Computing force metric C |
| ...... | ...... | ...... |

On the basis of the above, for each CS-ID in the metric update table, the computing force metric of each computing force service node corresponding to the CS-ID may be obtained periodically, for example, every one minute.

If the computing force metrics of all the computing force service nodes have not changed after the computing force metrics are obtained every time, the metric update table is kept unchanged and the third-type computing force route is not re-sent.

When the computing force metric of any computing force service node corresponding to the first CS-ID (which refers to any CS-ID in the metric update table) changes, for example, computing force metric A being changed to computing force metric A', the computing force route egress node re-sends the third-type computing force route to the computing force route ingress node. The third-type computing force route may include the first CS-ID, the CIS-ID of each computing force service node, and the computing force metric of each computing force service node.

Furthermore, the computing force route egress node records the changed computing force metric of the computing force service node in the metric update table, for example, updating the computing force metric A to the computing force metric A' in the metric update table.

In an example, after receiving the third-type computing force route in step 406, the computing force route ingress node may further record the first CS-ID and the computing force metric of each computing force service node corresponding to the first CS-ID in the metric update table, and record the update time of the computing force metrics (for example, the current time may be taken as the update time). As shown in Table 2, it is an example of the metric update table.

**Table 2**

| CS-ID | CIS-ID | Computing force metric | Update time |
|---|---|---|---|
| CS-ID 1 | aaa | Computing force metric A | Time mmm |
| | bbb | Computing force metric B | Time mmm |
| | ccc | Computing force metric C | Time mmm |
| ...... | ...... | ...... | ...... |

On the basis of the above, the computing force route ingress node updates the metric update table each time it receives the third-type computing force route, that is, updates the computing force metric of each computing force service node corresponding to the first CS-ID and records the update time of the computing force metric in the metric update table.

In an example, in step 404 after receiving the first service message, the computing force route ingress node may further interrogate the metric update table according to the first CS-ID if there is no flow table matching the first service feature and there is the first CS-ID corresponding to the first service feature in the mapping table, and send the second-type computing force route to the computing force route egress node if there is no computing force metric corresponding to the first CS-ID in the metric update table.

In an example, the computing force route ingress node may further receive a second service message (for example, a service message sent by another terminal device). The second service message includes a second service feature.

In step 404, if there is no flow table matching the second service feature and there is the first mapping entry (that includes the first CS-ID and the first node position) matching the second service feature in the mapping table, the second service feature corresponds to the computing force service.

In this case, the second service message is not the first one to access the computing force service. That is, the computing force route ingress node has subscribed to the computing force metrics corresponding to the first CS-ID through the second-type computing force route. Therefore, the computing force route ingress node may interrogate the metric update table according to the first CS-ID (as shown in Table 2).

If there are the computing force metrics of the plurality of computing force service nodes corresponding to the first CS-ID in the metric update table and a difference between the current time and the update time is less than a threshold, the computing force route ingress node may obtain the computing force metrics of the plurality of computing force service nodes corresponding to the first CS-ID from the metric update table.

According to the computing force metric of each computing force service node, the computing force route ingress node selects one computing force service node as the target computing force service node from all the computing force service nodes (as referred to step 407). The flow table matching the second service feature may be established according to the target computing force service node (as referred to step 408). The computing force route ingress node sends the second service message to the target computing force service node according to the flow table.

If there are no computing force metrics of the plurality of computing force service nodes corresponding to the first CS-ID in the metric update table, or if there are the computing force metrics of the plurality of computing force service nodes corresponding to the first CS-ID in the metric update table and the difference between the current time and the update time is not less than the threshold (that is, the content of the metric update table is not credible and may be incorrect data), the computing force route ingress node sends the second-type computing force route that includes the first CS-ID to the computing force route egress node, that is, steps 404-409 are repeated.

In an example, the case that the flow table is aged means that: the computing force route ingress node updates the last hit time of the flow table each time it receives the service message corresponding to the flow table, and the flow table is aged if the difference between the current time and the last hit time of the flow table is greater than a time threshold, that is, the flow table needs to be deleted.

The flow table corresponding to the CS-ID means that: when the service feature corresponds to the CS-ID (the correspondence between the service feature and the CS-ID is obtained from the mapping table), the flow table corresponding to the service feature is the flow table corresponding to the CS-ID.

If all the flow tables corresponding to the first CS-ID are aged, the computing force route ingress node sends a withdraw route (also called an unsubscription route) to the computing force route egress node. The unsubscription route includes the first CS-ID.

For example, the computing force route ingress node obtains the node position of the computing force route egress node corresponding to the first CS-ID from the mapping table, and sends the withdraw route to the computing force routing egress node in accordance to the node position.

For example, the withdraw route is targeted at the second-type computing force route, indicating that the second-type computing force route needs to be withdrawn. The withdraw route is configured to enable the computing force route egress node to stop sending the third-type computing force route.

For a scenario where an RR exists, the computing force route ingress node sends the withdraw route to the RR, and the RR sends the withdraw route to the computing force route egress node. For a scenario where the RR does not exist, the computing force route ingress node may directly send the withdraw route to the computing force route egress node.

After receiving the withdraw route, the computing force route egress node obtains the first CS-ID from the withdraw route. Since the withdraw route is configured to withdraw the second-type computing force route and includes the first CS-ID, the computing force route egress node may delete the first CS-ID and the computing force metric of each computing force service node corresponding to the first CS-ID from the metric update table (as shown in Table 1).

After deleting the entries corresponding to the first CS-ID from the metric update table, the computing force route egress node may stop sending the third-type computing force route directed to the first CS-ID to the computing force route ingress node.

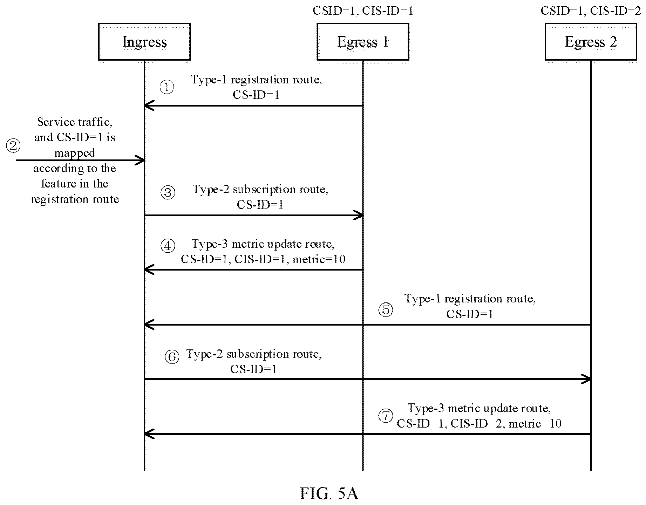

In an example, as illustrated in FIG. 5A, it is a schematic diagram of subscribing to the computing force metrics corresponding to a CS-ID without an RR. At the 1st step, Egress1 (a computing force route egress node) sends a Type-1 registration route (a first-type computing force route) to Ingress (a computing force route ingress node). The Type-1 registration route includes the CS-ID being 1.

At the 2nd step, Ingress receives a service traffic (i.e., a service message) and maps the CS-ID to be 1 according to the feature in the Type-1 registration route. For example, the Type-1 registration route further includes a service feature. According to the service feature in the service traffic and the service feature in the Type-1 registration route, it is mapped that the CS-ID is 1.

At the 3rd step, Ingress sends a Type-2 subscription route (a second-type computing force route) to Egress 1. The Type-2 subscription route may include the CS-ID being 1.

At the 4rd step, Egress 1 sends a Type-3 metric update route (a third-type computing force route) to Ingress. The Type-3 metric update route may include the CS-ID, a CIS-ID and a computing force metric. The computing force metric is denoted as metric. For example, the CS-ID is 1, the CIS-ID is 1, and the metric is 10.

At the 5th step, Egress 2 sends a Type-1 registration route to Ingress, with the CS-ID being 1.

At the 6th step, Ingress sends a Type-2 subscription route to Egress 2 with the CS-ID being 1.

At the 7th step, Egress 2 sends a Type-3 metric update route to Ingress. The Type-3 metric update route may include the CS-ID, a CIS-ID and a metric, with the CS-ID being 1, the CIS-ID being 2 and the metric being 10.

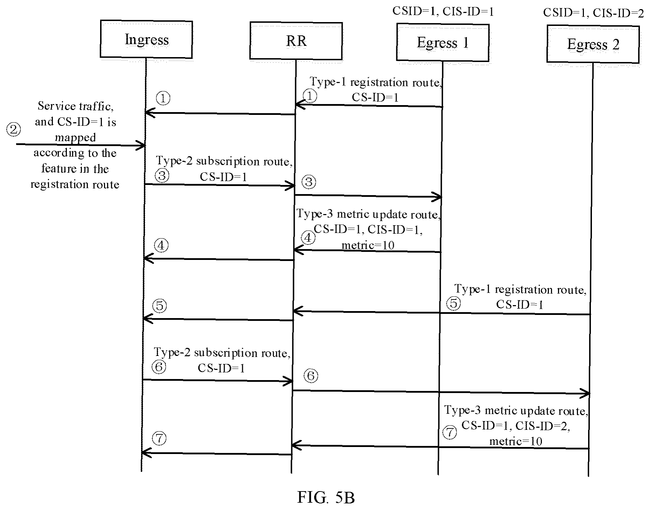

As illustrated in FIG. 5B, it is a schematic diagram of subscribing to the computing force metrics corresponding to a CS-ID with an RR.

At the 1st step, Egress1 sends a Type-1 registration route (a first-type computing force route) to an RR, and the RR sends the Type-1 registration route to Ingress. The Type-1 registration route includes the CS-ID being 1.

At the 2nd step, Ingress receives a service traffic (i.e., a service message) and maps the CS-ID to be 1 according to the feature in the Type-1 registration route. For example, the Type-1 registration route further includes a service feature. According to the service feature in the service traffic and the service feature in the Type-1 registration route, it is mapped that the CS-ID is 1.

At the 3rd step, Ingress sends a Type-2 subscription route (a second-type computing force route) to the RR, and the RR sends the Type-2 subscription route to Egress 1. The Type-2 subscription route may include the CS-ID being 1.

At the 4rd step, Egress 1 sends a Type-3 metric update route (a third-type computing force route) to the RR, and the RR sends the Type-3 metric update route to Ingress. The Type-3 metric update route may include the CS-ID, a CIS-ID and a metric. For example, the CS-ID is 1, the CIS-ID is 1, and the metric is 10.

At the 5th step, Egress 2 sends a Type-1 registration route to the RR, and the RR sends the Type-1 registration route to Ingress. The Type-1 registration route may include the CS-ID which, for example, is 1.

At the 6th step, Ingress sends a Type-2 subscription route to the RR, and the RR sends the Type-2 subscription route to Egress 2. The Type-2 subscription route may include the CS-ID which, for example, is 1.

At the 7th step, Egress 2 sends a Type-3 metric update route to the RR, and the RR sends the Type-3 metric update route to Ingress. The Type-3 metric update route may include the CS-ID being 1, a CIS-ID being 2 and a metric being 10.

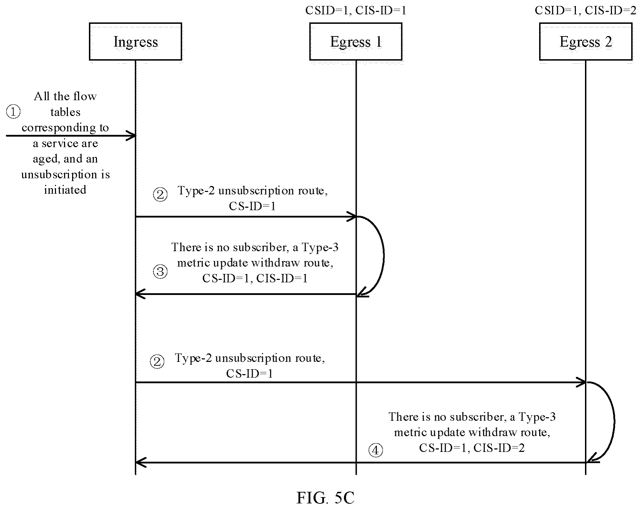

As illustrated in FIG. 5C, it is a schematic diagram of unsubscribing to computing force metrics corresponding to a CS-ID without an RR.

At the 1st step, Ingress determines that all the flow tables corresponding to a service are aged and initiates an unsubscription.

At the 2nd step, Ingress sends a Type-2 unsubscription route (i.e., a withdraw route targeted at a second-type computing force route) to Egress 1, where the Type-2 unsubscription route may include the CS-ID being 1, and Ingress sends a Type-2 unsubscription route to Egress 2, where the Type-2 unsubscription route may include the CS-ID being 1.

At the 3rd step, Egress 1 determines that there is no subscriber and sends a Type-3 metric update withdraw route to Ingress. The Type-3 metric update withdraw route may include the CS-ID being 1 and a CIS-ID being 1.

At the 4th step, Egress 2 determines that there is no subscriber and sends a Type-3 metric update withdraw route to Ingress. The Type-3 metric update withdraw route may include the CS-ID being 1 and a CIS-ID being 2.

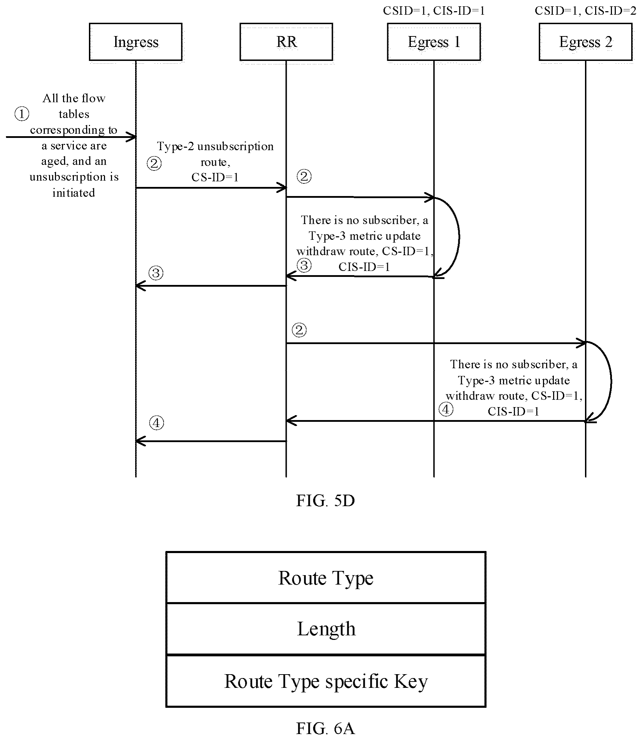

As illustrated in FIG. 5D, it is a schematic diagram of unsubscribing to computing force metrics corresponding to a CS-ID with an RR.

At the 1st step, Ingress determines that all the flow tables corresponding to a service are aged and initiates an unsubscription.

At the 2nd step, Ingress sends a Type-2 unsubscription route (i.e., a withdraw route targeted at a second-type computing force route) to the RR, and the RR sends the Type-2 unsubscription route to Egress 1 and Egress 2. The Type-2 unsubscription route may include the CS-ID being 1.

At the 3rd step, Egress 1 determines that there is no subscriber and sends a Type-3 metric update withdraw route to the RR, and the RR sends the Type-3 metric update withdraw route to Ingress. The route includes the CS-ID being 1 and a CIS-ID being 1.

At the 4th step, Egress 2 determines that there is no subscriber and sends a Type-3 metric update withdraw route to the RR, and the RR sends the Type-3 metric update withdraw route to Ingress. The route includes the CS-ID being 1 and a CIS-ID being 2.

In an example, a computing force route address family may be added into a BGP message (i.e., a new address family is added as the computing force route address family), and the computing force route address family may support the first-type computing force route (the Type-1 route among the computing force routes), the second-type computing force route (the Type-2 route among the computing force routes) and the third-type computing force route (the Type-3 route among the computing force routes). For the newly added computing force route address family, it is only configured for transmitting the computing force routes, rather than transmitting the BGP routes of other types except the computing force routes.

For example, taking an UPDATE message among the BGP messages as an example, the BGP message may include an unfeasible routes length field, a withdraw routes field, a total path attribute length field, a path attribute field, and an NLRI field. By improving these fields, it is possible to add the new computing force route address family.

To support the first-type computing force route, the following improvements may be made to the BGP message.

The BGP message may include the NLRI field and the path attribute field related to the NLRI field. The NLRI field may include an address family information field, a route type field and a route type specific key field.

The address family information field may be a first designated identifier, which indicates that the BGP message is targeted at the computing force route.

For example, the address family information field has been configured to indicate the address family of the BGP message, such as a IPv6 address family, a multicast address family and an EVPN address family. On the basis of the above, the BGP message may support the newly added computing force route address family and indicate the newly added computing force route address family by the first designated identifier.

The address family information field may be composed of a 2-byte address family identifier (AFI) and a 1-byte subsequent address family identifier (SAFI). Therefore, by setting the AFI to be a value of A and the SAFI to be a value of B to represent the first designated identifier. The values A and B may be configured arbitrarily as long as they do not overlap with the values of the existing address family.

Besides the address family information field, the NLRI field may further include the route type field, a length field, and the route type specific key field, as illustrated in FIG. 6A which is a schematic diagram of an NLRI field.

A Route Type field represents the route type field. When the route type field is a first value, it indicates that the BGP message is the first-type computing force route. For example, when the Route Type field is 1, it indicates that the BGP message is the first-type computing force route. The length of the Route Type field may be 1 byte.

A Length field represents the length field. The Length field indicates the length of the first-type computing force route. The length of the Length field may be 1 byte or 2 bytes.

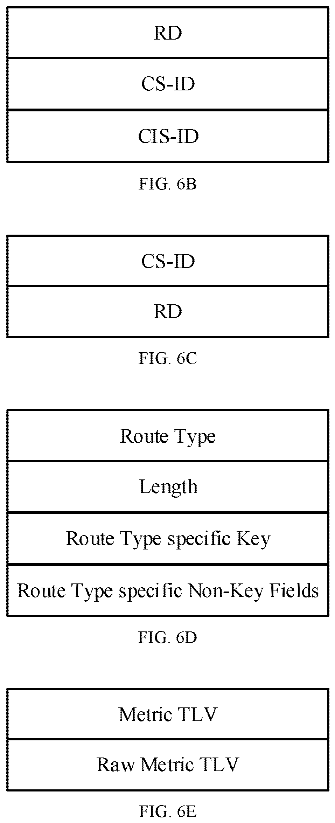

A Route Type specific Key field represents the route type specific key field that carries the first CS-ID. As illustrated in FIG. 6B, it is a schematic diagram of a route type specific key field in the NLRI field. The route type specific key field may include a route distinguisher (RD) field, a CS-ID field and a CIS-ID field.

The RD field is configured to carry a route distinguisher. The length of the RD field may be 8 bytes, which, however, is not a limitation on the route distinguisher. The CS-ID field is configured to carry a CS-ID, that is, to carry the first CS-ID mentioned above. The length of the CS-ID field may be 4 bytes. The CIS-ID field is configured to carry a CIS-ID. The length of the CIS-ID field may be 4 bytes.

The BGP message may include the path attribute field related to the NLRI field. The path attribute field is configured to carry a service feature corresponding to the first CS-ID and a node position of the computing force route egress node. For example, the path attribute field may include a locator type-length-value (TLV), and the locator TLV may include the node position of the computing force route egress node, or may include both the node position of the computing force route egress node and the service feature.

To support the second-type computing force route, the following improvements may be made to the BGP message.

For example, the BGP message may include the NLRI field, and the NLRI field may include the address family information field, the route type field and the route type specific key field. The address family information field may be the first designated identifier, which indicates that the BGP message is targeted at the computing force route.

Besides the address family information field, the NLRI field may further include the route type field, the length field, and the route type specific key field, as illustrated in FIG. 6A which is a schematic diagram of an NLRI field.

The Route Type field represents the route type field. When the route type field is a second value, it indicates that the BGP message is the second-type computing force route. For example, when the Route Type field is 2, it indicates that the BGP message is the second-type computing force route. The length of the Route Type field may be 1 byte.

The Length field represents the length field. The Length field indicates the length of the second-type computing force route. The length of the Length field may be 1 byte or 2 bytes.

The Route Type specific Key field represents the route type specific key field that carries the first CS-ID. As illustrated in FIG. 6C, it is a schematic diagram of a route type specific key field in the NLRI field. The route type specific key field may include the RD field and the CIS-ID field.

The RD field is configured to carry the route distinguisher. The length of the RD field may be 8 bytes, which, however, is not a limitation on the route distinguisher. The CS-ID field is configured to carry the CS-ID, that is, to carry the first CS-ID mentioned above. The length of the CS-ID field may be 4 bytes.

The BGP message may further include the path attribute field related to the NLRI field. The path attribute field may include a subscribe option TLV. The subscribe option TLV is denoted as Flag TLV. It is to be understood that the Flag TLV is optional, and the path attribute field may not have the Flag TLV.

The value of the Flag TLV indicates whether an aggregation is supported, whether raw metrics are requested, etc.

If the value of the Flag TLV indicates that the aggregation is supported, it means that the computing force route ingress node subscribes to a coarse-grained computing force metric. That is, it is expected to aggregate the raw metrics to obtain the coarse-grained computing force metric.

If the value of the Flag TLV indicates a request for the raw metrics, it means that the computing force route ingress node subscribes to a fine-grained computing force metric. That is, it is not expected for the computing force route egress node to aggregate the raw metrics.

To support the third-type computing force route, the following improvements may be made to the BGP message.

The BGP message includes the NLRI field, and the NLRI field includes the address family information field, the route type field, the route type specific key field, and a route type specific non-key field. The address family information field may be the first designated identifier, which indicates that the BGP message is targeted at the computing force route. Besides the address family information field, the NLRI field further includes the route type field, the length field, the route type specific key field, and the route type specific non-key field. As illustrated in FIG. 6D, it is a schematic diagram of an NLRI field.

A Route Type field represents the route type field. When the route type field is a third value, it indicates that the BGP message is the third-type computing force route. For example, when the Route Type field is 3, it indicates that the BGP message is the third-type computing force route. The length of the Route Type field may be 1 byte.

A Length field represents the length field. The Length field indicates the length of the second-type computing force route. The length of the Length field may be 1 byte or 2 bytes.

A Route Type specific Key field represents the route type specific key field that carries the first CS-ID. As illustrated in FIG. 6B, it is a schematic diagram of a route type specific key field in the NLRI field. The route type specific key field may include the RD field, the CS-ID field and the CIS-ID field.

The RD field is configured to carry the route identifier. The length of the RD field may be 8 bytes. The CS-ID field is configured to carry the CS-ID, that is, to carry the first CS-ID mentioned above. The length of the CS-ID field may be 4 bytes. The CIS-ID field is configured to carry the CIS-ID. The length of the CIS-ID field may be 4 bytes.

A Route Type specific Non-Key Fields (abbreviated as Route Type Non-Key) represent the route type specific non-key fields. The route type specific non-key field is configured to carry the computing force metric of each computing force service node corresponding to the first CS-ID. As illustrated in FIG. 6E, it is a schematic diagram of a route type specific non-key field in the NLRI field.

The route type specific non-key field may include Metric TLV and Raw Metric TLV. The Metric TLV carries the coarse-grained computing force metric, and the Raw Metric TLV carries the fine-grained metric. If the computing force route ingress node subscribes to the coarse-grained computing force metric, the Metric TLV carries the coarse-grained computing force metric, while the Raw Metric TLV is empty. If the computing force route ingress node subscribes to the fine-grained computing force metric, the Raw Metric TLV carries the fine-grained computing force metric, while the Metric TLV is empty.

The BGP message may further include the path attribute field related to the NLRI field. The path attribute field may include a priority TLV. The priority TLV represents a priority of the third-type computing force route. In this way, a higher priority may be set in the priority TLV, thereby setting the higher priority for the third-type computing force route, so that the network gives priority to transmitting the third-type computing force route.

In an example, the computing force routes may be expanded in an EVPN address family of the BGP message (that is, the EVPN address family is configured for the computing force route address family). The EVPN address family supports EVPN routes, the first-type computing force routes (the Type-1 routes of the computing force routes), the second-type computing force routes (the Type-2 routes of the computing force routes) and the third-type computing force routes(the Type-3 routes of the computing force routes).

Expanding the computing force routes in the EVPN address family means that the existing EVPN address family is only configured to transmit the EVPN routes, such as Type-2 EVPN routes, Type-3 EVPN routes, and Type-5 EVPN routes. On the basis of the above, the EVPN address family is further configured to transmit the computing force routes, such as the first-type computing force routes, the second-type computing force routes, and the third-type computing force routes. In this way, the EVPN address family is to be expanded so that the EVPN address family supports all of the EVPN routes, the first-type computing force routes, the second-type computing force routes, and the third-type computing force routes.

To support the first-type computing force route, the following improvements may be made to the BGP message.

The BGP message may include the NLRI field and the path attribute field related to the NLRI field. The NLRI field may include the address family information field, the route type field and the route type specific key field.

The address family information field may be a second designated identifier, which indicates that the BGP message is targeted at the EVPN route. That is, the second designated identifier indicates the EVPN address family in the BGP message. For example, the address family information field may be composed of 2-byte AFI and 1-byte SAFI, and the second designated identifier is represented by a combined value of the AFI and the SAFI.

Besides the address family information field, the NLRI field may further include the route type field, the length field, and the route type specific key field, as illustrated in FIG. 6A which is a schematic diagram of an NLRI field.

The Route Type field represents the route type field. When the route type field is a fourth value in a preset set, it indicates that the BGP message is the first-type computing force route. For example, the values in the preset set are values that are not occupied by the EVPN routes. That is, the values (which are at least three) that are not occupied by the EVPN routes are added into the preset set, such as 15, 16, and 17. On the basis of the above, the first-type computing force route occupies a certain value in the preset set (denoted as the fourth value). For example, when the Route Type field is 15, it indicates that the BGP message is the first-type computing force route. The length of the Route Type field may be 1 byte.

The Length field indicates the length field. The Length field indicates the length of the first-type computing force route. The length of the Length field may be 1 byte or 2 bytes.

The Route Type specific Key field represents the route type specific key field that carries the first CS-ID. As illustrated in FIG. 6B, the route type specific key field may include the RD field, the CS-ID field and the CIS-ID field. The RD field is configured to carry the route identifier. The length of the RD field may be 8 bytes. The CIS-ID field is configured to carry the CS-ID. The length of the CS-ID field may be 4 bytes. The CIS-ID field is configured to carry the CIS-ID. The length of the CIS-ID field may be 4 bytes.

The BGP message may include the path attribute field related to the NLRI field. The path attribute field is configured to carry the service feature corresponding to the first CS-ID and the node position of the computing force route egress node.

To support the second-type computing force route, the following improvements may be made to the BGP message.

The BGP message may include the NLRI field, and the NLRI field may include the address family information field, the route type field and the route type specific key field. The address family information field may be the second designated identifier, which indicates the EVPN address family in the BGP message.

Besides the address family information field, the NLRI field may further include the route type field, the length field, and the route type specific key field, as illustrated in FIG. 6A which is a schematic diagram of an NLRI field.

The Route Type field represents the route type field. When the route type field is a fifth value in the preset set, it indicates that the BGP message is the second-type computing force route. For example, the values in the preset set are the values that are not occupied by the EVPN routes. On the basis of the above, the second-type computing force route occupies a certain value in the preset set (denoted as the fifth value). For example, when the Route Type field is 16, it indicates that the BGP message is the second-type computing force route. The length of the Route Type field may be 1 byte.

The Length field represents the length field. The Length field indicates the length of the second-type computing force route. The length of the Length field may be 1 byte or 2 bytes.

The Route Type specific Key field represents the route type specific key field that carries the first CS-ID. For example, the route type specific key field may include the RD field and the CIS-ID field. The RD field is configured to carry the route identifier. The length of the RD field may be 8 bytes. The CIS-ID field is configured to carry the CS-ID. The length of the CS-ID field may be 4 bytes.

The BGP message may further include the path attribute field related to the NLRI field. The path attribute field may include the subscribe option TLV, which is denoted as Flag TLV. The value of the Flag TLV indicates whether to support the aggregation, whether to support the raw metrics, etc.

To support the third-type computing force route, the following improvements may be made to the BGP message.

The BGP message may include the NLRI field, and the NLRI field may include the address family information field, the route type field and the route type specific key field. The address family information field may be the second designated identifier, which indicates the EVPN address family in the BGP message. Besides the address family information field, the NLRI field further includes the route type field, the length field, the route type specific key field, and the route type specific non-key field. As illustrated in FIG. 6D, it is a schematic diagram of an NLRI field.

The Route Type field represents the route type field. When the route type field is a sixth value in the preset set, it indicates that the BGP message is the third-type computing force route. For example, the values in the preset set are the values that are not occupied by the EVPN routes. On the basis of the above, the third-type computing force route occupies a certain value in the preset set (denoted as the sixth value). For example, when the Route Type field is 17, it indicates that the BGP message is the third-type computing force route. The length of the Route Type field may be 1 byte.

The Length field represents the length field. The Length field indicates the length of the second-type computing force route. The length of the Length field may be 1 byte or 2 bytes.

The Route Type specific Key field represents the route type specific key field that carries the first CS-ID. For example, the route type specific key field may include the RD field, the CS-ID field and the CIS-ID field. The RD field is configured to carry the route identifier. The length of the RD field may be 8 bytes. The CS-ID field is configured to carry the CS-ID, that is, to carry the first CS-ID mentioned above. The length of the CS-ID field may be 4 bytes. The CIS-ID field is configured to carry the CIS-ID. The length of the CIS-ID field may be 4 bytes.

The Route Type specific Non-Key Fields represent the route type specific non-key fields. The route type specific non-key field is configured to carry the computing force metric of each computing force service node corresponding to the first CS-ID. For example, as illustrated in FIG. 6E, the route type specific non-key field may include the Metric TLV and the Raw Metric TLV. The Metric TLV carries the coarse-grained computing force metric, and the Raw Metric TLV carries the fine-grained metric.

It can be seen from the above technical solutions that in the examples of the present application, the message can be sent to the computing force service node with the best computing force metric, which makes full use of the computing resources of each computing force service node, thereby improving the utilization efficiency of the computing resources. Through the on-demand distributed subscription to computing force routes, it can efficiently achieve the advertisement of the computing force metrics, thereby implementing the efficient advertisement of the computing force metrics. A new address family or the EVPN address family is expanded to advertise the computing force metrics on demand. The computing force metrics are defined in the NLRI to avoid the inability to efficiently package the computing force metrics.

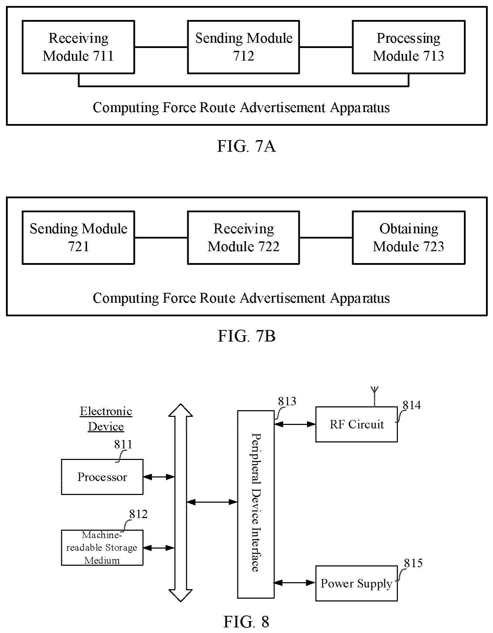

Based on the same application concept as the above methods, the present application provides a computing force route advertisement apparatus, which is applicable to a computing force route ingress node in which a mapping table exists, where the mapping table includes a correspondence between service features and CS-IDs, and the mapping table is generated from a first-type computing force route sent by a computing force route egress node. As illustrated in FIG. 7A, the apparatus includes:
a receiving module 711 that is configured to receive a first service message that includes a first service feature;
a sending module 712 that is configured to send a second-type computing force route to the computing force route egress node if there is no flow table matching the first service feature and there is a first mapping table entry matching the first service feature in the mapping table, where the second-type computing force route includes a first CS -ID corresponding to the first service feature;
where the receiving module 711 is further configured to receive a third-type computing force route sent by the computing force route egress node, where the third-type computing force route includes a computing force metric of each of a plurality of computing force service nodes, and the plurality of computing force service nodes correspond to the same first CS-ID; and
a processing module 713 that is configured to select a target computing force service node according to the computing force metric of each computing force service node and establish the flow table matching the first service feature, where the flow table includes path information;
where the sending module 712 is further configured to send the first service message to the target computing force service node in accordance with the path information.

In an example, the first-type computing force route further includes a node position of the computing force route egress node, and the mapping table further includes the node position. When sending the second-type computing force route to the computing force route egress node, the sending module 712 is specifically configured to obtain a first node position corresponding to the first service feature from the first mapping table entry, and send the second-type computing force route to the computing force route egress node in accordance with the first node position.

In an example, there is further a metric update table in the computing force route ingress node. When sending the second-type computing force route to the computing force route egress node, the sending module 712 is specifically configured to interrogate the metric update table according to the first CS-ID, and send the second-type computing force route to the computing force route egress node if there are no computing force metrics of the plurality of computing force service nodes corresponding to the first CS-ID in the metric update table.

In an example, there is further the metric update table in the computing force route ingress node. When receiving the third-type computing force route sent by the computing force route egress node, the receiving module 711 is specifically configured to receive a plurality of third-type computing force routes sent by the computing force route egress node, where the computing force route egress node sends one third-type computing force route to the computing force route ingress node when the computing force metric of any computing force service node corresponding to the first CS-ID changes.

The processing module 713 is further configured to record, after the receiving module receives each third-type computing force route, a correspondence between the first CS-ID and the computing force metric of each of the plurality of computing force service nodes and record update time of each computing force metric in the metric update table.

In an example, the receiving module 711 is further configured to receive a second service message that includes a second service feature. The processing module 713 is further configured to interrogate the metric update table according to the first CS-ID if there is no flow table matching the second service feature and there is the first mapping table entry matching the second service feature in the mapping table, and if there are the computing force metrics of the plurality of computing force service nodes corresponding to the first CS-ID in the metric update table and a difference between current time and the update time is less than a threshold, configured to select a target computing force service node according to the computing force metric of each computing force service node and establish the flow table matching the second service feature.

The sending module 712 is further configured to if there are no computing force metrics of the plurality of computing force service nodes corresponding to the first CS-ID in the metric update table, or if there are the computing force metrics of the plurality of computing force service nodes corresponding to the first CS-ID in the metric update table and the difference between the current time and the update time is not less than the threshold, send the second-type computing force route to the computing force route egress node.

In an example, the sending module 712 is further configured to send a withdraw route to the computing force route egress node if all the flow tables corresponding to the first CS-ID are aged. The withdraw route includes the first CS-ID and enables the computing force route egress node that receives the withdraw route to stop sending the third-type computing force route directed to the first CS-ID to the computing force route ingress node.

In an example, the first-type computing force route is forwarded from the computing force route egress node to the computing force route ingress node via an RR; the second-type computing force route is forwarded to the computing force route egress node via the RR; and the third-type computing force route is forwarded from the computing force route egress node to the computing force route ingress node via the RR.

Based on the same application concept as the above methods, the examples of the present application provide a computing force route advertisement apparatus, which is applicable to a computing force route egress node. As illustrated in FIG. 7B, the apparatus may include:
a sending module 721 that is configured to send a first-type computing force route to a computing force route ingress node, where the first-type computing force route includes a service feature and a CS-ID for the computing force route ingress node to generate a mapping table, and the mapping table includes a correspondence between service features and CS-IDs;
a receiving module 722 that is configured to receive a second-type computing force route sent by the computing force route ingress node, where the second-type computing force route includes a first CS-ID; and
an obtaining module 723 that is configured to obtain a computing force metric of each of a plurality of computing force service nodes corresponding to the first CS-ID.

The sending module 721 is further configured to send a third-type computing force route to the computing force route ingress node. The third-type computing force route includes the computing force metric of each computing force service node, and is configured for the computing force route ingress node to select a target computing force service node according to the computing force metric of each computing force service node.

In an example, there is further a metric update table in the computing force route egress node. The receiving module 722 is further configured to record, after receiving the second-type computing force route sent by the computing force route ingress node, the first CS-ID and the computing force metric of each computing force service node in the metric update table. The sending module 721 is further configured to send the third-type computing force route to the computing force route ingress node when the computing force metric of any computing force service node corresponding to the first CS-ID changes.

The receiving module 722 is further configured to delete, in a case that a withdraw route sent by the computing force route ingress node and including the first CS-ID is received, the first CS-ID and the computing force metrics corresponding to the first CS-ID from the metric update table, and stop sending the third-type computing force route directed to the first CS-ID to the computing force route ingress node.

In an example, the first-type computing force route is forwarded to the computing force route ingress node via an RR; the second-type computing force route is forwarded from the computing force route ingress node to the computing force route egress node via the RR; and the third-type computing force route is forwarded to the computing force route ingress node via the RR.

Based on the same application concept as the above methods, an electronic device (such as the above computing force route ingress node or the above computing force route egress node) is provided in an example of the present application. As illustrated in FIG. 8, the electronic device may include a processor 811 and a machine-readable storage medium 812 storing machine-executable instructions executable by the processor 811. The processor 811 is configured to execute the machine-executable instructions to implement the computing force route advertisement methods disclosed in the above examples of the present application.

In an example, the processor 811 may include one or more processing cores, such as a quad-core processor and an octa-core processor. The processor 811 may be implemented in at least one hardware form of a digital signal processing (DSP), a field-programmable gate array (FPGA), or a programmable logic array (PLA). The processor 811 may further include a main processor and one or more co-processors. The main processor is configured to process data in an awake state, also called a central processing unit (CPU), and the co-processor is a low-power processor for processing the data in a standby state. In some examples, the processor 811 may be integrated with a graphics processing unit (GPU) that is responsible for rendering and drawing the contents to be displayed on a display screen.

In an example, optionally, the electronic device may include: a peripheral device interface 813 and at least one peripheral device. The processor 811 and the peripheral device interface 813 may be connected via a bus or a signal line. Each peripheral device may be connected to the peripheral device interface 813 via a bus, a signal line or a circuit board. The peripheral device may include at least one of a radio frequency circuit 814 and a power supply 815.

The radio frequency circuit 814 is configured to receive and transmit radio frequency (RF) signals, also called electromagnetic signals. The radio frequency circuit 814 communicates with a communication network and other communication devices through the electromagnetic signals. The radio frequency circuit 814 converts electrical signals into electromagnetic signals for transmission, or converts received electromagnetic signals into electrical signals. Optionally, the radio frequency circuit 814 includes an antenna system, an RF transceiver, one or more amplifiers, a tuner, an oscillator, a digital signal processor, a user identity module card, and the like. The radio frequency circuit 814 may communicate with user equipment through at least one wireless communication protocol. The wireless communication protocol includes but not limited to a world wide web, a metropolitan area network, an intra network, various generations of mobile communication networks (2G, 3G, 4G and 5G), a wireless local area network and/or a wireless fidelity (WiFi) network.

The power supply 815 is configured to supply power to various components in the base station. The power supply 815 may be alternating current, direct current, a disposable battery or a rechargeable battery.

Based on the same application concept as the above methods, a machine-readable storage medium is provided in an example of the present application and has various computer instructions stored thereon. When being executed by one or more processors, the computer instructions are capable of implementing the computing force route advertisement methods disclosed in the above examples of the present application.

The machine-readable storage medium may be any physical storage device, e.g., electronic, magnetic, optical, or another, and may contain or store information such as executable instructions and data. For example, the machine-readable storage medium may be: a random access memory (RAM), a volatile memory, a non-volatile memory, a flash memory, a storage drive (e.g., a hard disk drive), a solid state disk, any type of storage disk (e.g., CD-ROM, DVD, etc.), a similar storage medium, or a combination thereof.

It should be understood by those skilled in the art that the examples of the present application may be provided as methods, systems, or computer program products. Accordingly, the examples of the present application may take the form of an entirely hardware, an entirely software, or a combination of software and hardware. Further, the examples of the present application may take the form of a computer program product implemented on one or more computer-usable storage media (including, but not limited to, one or more disk memories, one or more CD-ROMs, one or more optical memories, etc.) that contain computer-usable program code therein.

The foregoing is merely examples of the present application and is not intended to limit the present application. The present application is subject to various changes and variations for those skilled in the art. Any modifications, equivalent substitutions, improvements, etc. made within the spirit and principle of the present application shall be included within the scope of the claims of the present application.

## Claims

1. A computing force route advertisement method, being applicable to a computing force route ingress node in which a mapping table exists, wherein the mapping table comprises a correspondence between service features and computing-aware traffic steering, CATS, service identifiers, CS-IDs, and the mapping table is generated from a first-type computing force route sent by a computing force route egress node, comprising:
receiving a first service message, wherein the first service message comprises a first service feature;
sending a second-type computing force route to the computing force route egress node if there is no flow table matching the first service feature and there is a first mapping table entry matching the first service feature in the mapping table, wherein the second-type computing force route comprises a first CS-ID corresponding to the first service feature;
receiving a third-type computing force route sent by the computing force route egress node, wherein the third-type computing force route comprises a computing force metric of each of a plurality of computing force service nodes, and the plurality of computing force service nodes correspond to the same first CS-ID;
selecting a target computing force service node according to the computing force metric of each computing force service node and establishing the flow table matching the first service feature, wherein the flow table comprises path information; and
sending the first service message to the target computing force service node in accordance with the path information.

2. The method according to claim 1, wherein the first-type computing force route further comprises a node position of the computing force route egress node, and the mapping table further comprises the node position; and
wherein sending the second-type computing force route to the computing force route egress node comprises:
obtaining a first node position corresponding to the first service feature from the first mapping table entry; and
sending the second-type computing force route to the computing force route egress node in accordance with the first node position.

3. The method according to claim 1, wherein there is further a metric update table in the computing force route ingress node; and
wherein sending the second-type computing force route to the computing force route egress node comprises:
interrogating the metric update table according to the first CS-ID; and
sending the second-type computing force route to the computing force route egress node if there are no computing force metrics of the plurality of computing force service nodes corresponding to the first CS-ID in the metric update table.

4. The method according to claim 1, wherein there is further a metric update table in the computing force route ingress node;
wherein receiving the third-type computing force route sent by the computing force route egress node comprises:
receiving a plurality of third-type computing force routes sent by the computing force route egress node, wherein the computing force route egress node sends one third-type computing force route to the computing force route ingress node when the computing force metric of any computing force service node corresponding to the first CS-ID changes; and
wherein after receiving each third-type computing force route, the method further comprises:
recording a correspondence between the first CS-ID and the computing force metric of each of the plurality of computing force service nodes and recording update time of each computing force metric in the metric update table.

5. The method according to claim 4, further comprising:
receiving a second service message, wherein the second service message comprises a second service feature;
interrogating the metric update table according to the first CS-ID if there is no flow table matching the second service feature and there is the first mapping table entry matching the second service feature in the mapping table;
if there are the computing force metrics of the plurality of computing force service nodes corresponding to the first CS-ID in the metric update table and a difference between current time and the update time is less than a threshold, selecting a target computing force service node according to the computing force metric of each computing force service node and establishing the flow table matching the second service feature; and
if there are no computing force metrics of the plurality of computing force service nodes corresponding to the first CS-ID in the metric update table, or if there are the computing force metrics of the plurality of computing force service nodes corresponding to the first CS-ID in the metric update table and the difference between the current time and the update time is not less than the threshold, sending the second-type computing force route to the computing force route egress node.

6. The method according to claim 4, further comprising:
sending a withdraw route to the computing force route egress node if all flow tables corresponding to the first CS-ID are aged, wherein the withdraw route comprises the first CS-ID and enables the computing force route egress node that receives the withdraw route to stop sending the third-type computing force route directed to the first CS-ID to the computing force route ingress node.

7. The method according to claim 1, wherein
the first-type computing force route is forwarded from the computing force route egress node to the computing force route ingress node via a route reflector, RR;
the second-type computing force route is forwarded to the computing force route egress node via the RR; and
the third-type computing force route is forwarded from the computing force route egress node to the computing force route ingress node via the RR.

8. The method according to any one of claims 1 to 7, wherein a border gateway protocol, BGP, message comprises a network layer reachability information, NLRI, field, and the NLRI field comprises an address family information field, a route type field and a route type specific key field,
wherein the address family information field being a first designated identifier indicates that the BGP message is targeted at a computing force route; and wherein
the route type field being a first value indicates that the BGP message is the first-type computing force route, and the route type specific key field carries the first CS-ID, wherein the BGP message further comprises a path attribute field related to the NLRI field, and the path attribute field carries the service feature corresponding to the first CS-ID and a node position of the computing force route egress node;
the route type field being a second value indicates that the BGP message is the second-type computing force route, and the route type specific key field carries the first CS-ID; and
the route type field being a third value indicates that the BGP message is the third-type computing force route, and the route type specific key field carries the first CS-ID, wherein when the BGP message is the third-type computing force route, the NLRI field further comprises a route type specific non-key field, and the route type specific non-key field carries the computing force metric of each computing force service node corresponding to the first CS-ID.

9. The method according to any one of claims 1 to 7, wherein a border gateway protocol, BGP, message comprises a network layer reachability information, NLRI, field, and the NLRI field comprises an address family information field, a route type field and a route type specific key field,
wherein the address family information field being a second designated identifier indicates that the BGP message is targeted at an Ethernet virtual private network, EVPN, route; and wherein
the route type field being a fourth value in a preset set indicates that the BGP message is the first-type computing force route, and the route type specific key field carries the first CS-ID, wherein the BGP message further comprises a path attribute field related to the NLRI field, and the path attribute field carries the service feature corresponding to the first CS-ID and a node position of the computing force route egress node;
the route type field being a fifth value in the preset set indicates that the BGP message is the second-type computing force route, and the route type specific key field carries the first CS-ID; and
the route type field being a sixth value in the preset set indicates that the BGP message is the third-type computing force route, and the route type specific key field carries the first CS-ID, wherein when the BGP message is the third-type computing force route, the NLRI field further comprises a route type specific non-key field, and the route type specific non-key field carries the computing force metric of each computing force service node corresponding to the first CS-ID;
wherein values in the preset set are not occupied by EVPN routes.

10. A computing force route advertisement method, being applicable to a computing force route egress node, comprising:
sending a first-type computing force route to a computing force route ingress node, wherein the first-type computing force route comprises a service feature and a computing-aware traffic steering, CATS, service identifier, CS-ID, for the computing force route ingress node to generate a mapping table, and the mapping table comprises a correspondence between service features and CS-IDs;
receiving a second-type computing force route sent by the computing force route ingress node, wherein the second-type computing force route comprises a first CS-ID;
obtaining a computing force metric of each of a plurality of computing force service nodes corresponding to the first CS-ID; and
sending a third-type computing force route to the computing force route ingress node, wherein the third-type computing force route comprises the computing force metric of each computing force service node, and is configured for the computing force route ingress node to select a target computing force service node according to the computing force metric of each computing force service node.

11. The method according to claim 10, wherein there is further a metric update table in the computing force route egress node;
wherein after receiving the second-type computing force route sent by the computing force route ingress node, the method further comprises:
recording the first CS-ID and the computing force metric of each computing force service node in the metric update table; and
sending the third-type computing force route to the computing force route ingress node when the computing force metric of any computing force service node corresponding to the first CS-ID changes.

12. The method according to claim 11, wherein after recording the first CS-ID and the computing force metric of each computing force service node in the metric update table, the method further comprises:
deleting, in a case that a withdraw route sent by the computing force route ingress node and comprising the first CS-ID is received, the first CS-ID and the computing force metrics corresponding to the first CS-ID from the metric update table; and
stopping sending the third-type computing force route directed to the first CS-ID to the computing force route ingress node.

13. The method according to claim 10, wherein
the first-type computing force route is forwarded to the computing force route ingress node via a route reflector, RR;
the second-type computing force route is forwarded from the computing force route ingress node to the computing force route egress node via the RR; and
the third-type computing force route is forwarded to the computing force route ingress node via the RR.

14. The method according to any one of claims 10 to 13, wherein a border gateway protocol, BGP, message comprises a network layer reachability information, NLRI, field, and the NLRI field comprises an address family information field, a route type field and a route type specific key field,
wherein the address family information field being a first designated identifier indicates that the BGP message is targeted at a computing force route; and wherein
the route type field being a first value indicates that the BGP message is the first-type computing force route, and the route type specific key field carries the first CS-ID, wherein the BGP message further comprises a path attribute field related to the NLRI field, and the path attribute field carries a service feature corresponding to the first CS-ID and a node position of the computing force route egress node;
the route type field being a second value indicates that the BGP message is the second-type computing force route, and the route type specific key field carries the first CS-ID; and
the route type field being a third value indicates that the BGP message is the third-type computing force route, and the route type specific key field carries the first CS-ID, wherein when the BGP message is the third-type computing force route, the NLRI field further comprises a route type specific non-key field, and the route type specific non-key field carries the computing force metric of each computing force service node corresponding to the first CS-ID.

15. The method according to any one of claims 10 to 13, wherein a border gateway protocol, BGP, message comprises a network layer reachability information, NLRI, field, and the NLRI field comprises an address family information field, a route type field and a route type specific key field,
wherein the address family information field being a second designated identifier indicates that the BGP message is targeted at an Ethernet virtual private network, EVPN, route; and wherein
the route type field being a fourth value in a preset set indicates that the BGP message is the first-type computing force route, and the route type specific key field carries the first CS-ID, wherein the BGP message further comprises a path attribute field related to the NLRI field, and the path attribute field carries a service feature corresponding to the first CS-ID and a node position of the computing force route egress node;
the route type field being a fifth value in the preset set indicates that the BGP message is the second-type computing force route, and the route type specific key field carries the first CS-ID; and
the route type field being a sixth value in the preset set indicates that the BGP message is the third-type computing force route, and the route type specific key field carries the first CS-ID, wherein when the BGP message is the third-type computing force route, the NLRI field further comprises a route type specific non-key field, and the route type specific non-key field carries the computing force metric of each computing force service node corresponding to the first CS-ID;
wherein values in the preset set are not occupied by EVPN routes.

16. A computing force route advertisement apparatus, being applicable to a computing force route ingress node in which a mapping table exists, wherein the mapping table comprises a correspondence between service features and computing-aware traffic steering, CATS, service identifiers, CS-IDs, and the mapping table is generated from a first-type computing force route sent by a computing force route egress node, comprising:
a receiving module, configured to receive a first service message, wherein the first service message comprises a first service feature;
a sending module, configured to send a second-type computing force route to the computing force route egress node if there is no flow table matching the first service feature and there is a first mapping table entry matching the first service feature in the mapping table, wherein the second-type computing force route comprises a first CS-ID corresponding to the same first service feature;
wherein the receiving module is further configured to receive a third-type computing force route sent by the computing force route egress node, wherein the third-type computing force route comprises a computing force metric of each of a plurality of computing force service nodes, and the plurality of computing force service nodes correspond to the first CS-ID; and
a processing module, configured to select a target computing force service node according to the computing force metric of each computing force service node and establish the flow table matching the first service feature, wherein the flow table comprises path information;
wherein the sending module is further configured to send the first service message to the target computing force service node in accordance with the path information.

17. The apparatus according to claim 16, wherein the first-type computing force route further comprises a node position of the computing force route egress node, and the mapping table further comprises the node position; and
wherein the sending module that sends the second-type computing force route to the computing force route egress node is configured to:
obtain a first node position corresponding to the first service feature from the first mapping table entry; and
send the second-type computing force route to the computing force route egress node in accordance with the first node position.

18. The apparatus according to claim 16, wherein there is further a metric update table in the computing force route ingress node;
wherein the sending module that sends the second-type computing force route to the computing force route egress node is configured to:
interrogate the metric update table according to the first CS-ID; and
send the second-type computing force route to the computing force route egress node if there are no computing force metrics of the plurality of computing force service nodes corresponding to the first CS-ID in the metric update table.

19. The apparatus according to claim 16, wherein there is further a metric update table in the computing force route ingress node;
wherein the receiving module that receives the third-type computing force route sent by the computing force route egress node is configured to: receive a plurality of third-type computing force routes sent by the computing force route egress node, wherein the computing force route egress node sends one third-type computing force route to the computing force route ingress node when the computing force metric of any computing force service node corresponding to the first CS-ID changes; and
wherein the processing module is further configured to record, after the receiving module receives each third-type computing force route, a correspondence between the first CS-ID and the computing force metric of each of the plurality of computing force service nodes and record update time of each computing force metric in the metric update table.

20. The apparatus according to claim 19,
wherein the receiving module is further configured to receive a second service message, wherein the second service message comprises a second service feature;
wherein the processing module is further configured to:
interrogate the metric update table according to the first CS-ID if there is no flow table matching the second service feature and there is the first mapping table entry matching the second service feature in the mapping table; and
if there are the computing force metrics of the plurality of computing force service nodes corresponding to the first CS-ID in the metric update table and a difference between current time and the update time is less than a threshold, select a target computing force service node according to the computing force metric of each computing force service node and establish the flow table matching the second service feature; and
wherein the sending module is further configured to if there are no computing force metrics of the plurality of computing force service nodes corresponding to the first CS-ID in the metric update table, or if there are the computing force metrics of the plurality of computing force service nodes corresponding to the first CS-ID in the metric update table and the difference between the current time and the update time is not less than the threshold, send the second-type computing force route to the computing force route egress node.

21. The apparatus according to claim 19, wherein the sending module is further configured to send a withdraw route to the computing force route egress node if all flow tables corresponding to the first CS-ID are aged, wherein the withdraw route comprises the first CS-ID and enables the computing force route egress node that receives the withdraw route to stop sending the third-type computing force route directed to the first CS-ID to the computing force route ingress node.

22. A computing force route advertisement apparatus, being applicable to a computing force route egress node, comprising:
a sending module, configured to send a first-type computing force route to a computing force route ingress node, wherein the first-type computing force route comprises a service feature and a computing-aware traffic steering, CATS, service identifier, CS-ID, for the computing force route ingress node to generate a mapping table, and the mapping table comprises a correspondence between service features and CS-IDs;
a receiving module, configured to receive a second-type computing force route sent by the computing force route ingress node, wherein the second-type computing force route comprises a first CS-ID; and
an obtaining module, configured to obtain a computing force metric of each of a plurality of computing force service nodes corresponding to the first CS-ID;
wherein the sending module is further configured to send a third-type computing force route to the computing force route ingress node, wherein the third-type computing force route comprises the computing force metric of each computing force service node, and is configured for the computing force route ingress node to select a target computing force service node according to the computing force metric of each computing force service node.

23. The apparatus according to claim 22, wherein there is further a metric update table in the computing force route egress node;
wherein the receiving module is further configured to record, after receiving the second-type computing force route sent by the computing force route ingress node, the first CS-ID and the computing force metric of each computing force service node in the metric update table; and
wherein the sending module is further configured to send the third-type computing force route to the computing force route ingress node when the computing force metric of any computing force service node corresponding to the first CS-ID changes.

24. The apparatus according to claim 23, wherein the receiving module is further configured to:
delete, in a case that a withdraw route sent by the computing force route ingress node and comprising the first CS-ID is received, the first CS-ID and the computing force metrics corresponding to the first CS-ID from the metric update table; and
stop sending the third-type computing force route directed to the first CS-ID to the computing force route ingress node.

25. A computing force route ingress node, comprising:
a processor and a machine-readable storage medium storing machine-executable instructions executable by the processor;
wherein the processor is configured to execute the machine-executable instructions to implement the method according to any one of claims 1-9.

26. A computing force route egress node, comprising:
a processor and a machine-readable storage medium storing machine-executable instructions executable by the processor;
wherein the processor is configured to execute the machine-executable instructions to implement the method according to any one of claims 10-15.
